# DEMANDE DE BREVET EUROPEEN

(11) **EP 0 886 417 A1**
(43) Date de publication de la demande: **23.12.1998**
(21) Numéro de dépôt: 98201933.3
(22) Date de dépôt: 09.06.1998
(51) Int. Cl.: H04M 1/57

(54) **Appareil téléphonique comportant une station de base et au moins un dispositif de combiné**

(30) Priorité: 17.06.1997 FR 9707509
(71) Demandeur: Koninklijke Philips Electronics N.V., 5621 BA Eindhoven (NL)
(72) Inventeur: Vitel, Sandrine, 75008 PAris (FR)
(74) Mandataire: Chaffraix, Jean

(57) **Abrégé**

Cet appareil de type DECT comporte une station de base (1) connectée au réseau téléphonique (12) transmettant une information d'identification définissant un usager appelant. Cette station est formée par un ensemble à processeur (20), une mémoire (26) contenant un programme d'exécution et une mémoire vive (24).

L'appareil comporte, aussi, au moins un dispositif de combiné (HS1, HS2...) formé entre autres par un écran de visualisation (60), un ensemble à processeur (50) destiné notamment à piloter ledit écran de visualisation.

Pour transmettre l'information d'identification, il est prévu des moyens de diffusion à tous les dispositifs de combinés en utilisant des moyens de transmission de messages de service que prévoit ladite norme DECT.
Application : téléphonie domestique.

## Description

L'invention concerne un appareil téléphonique satisfaisant à la norme DECT ou similaire comportant :
- une station de base connectée au réseau téléphonique transmettant une information d'identification définissant un usager appelant formé, entre autres, par :
   * un ensemble à processeur,
   * une mémoire contenant un programme d'exécution et
   * une mémoire vive,
- au moins un dispositif de combiné formé entre autres par
   * un écran de visualisation
   * un ensemble à processeur destiné notamment à piloter ledit écran de visualisation,
- des moyens de transmission de messages de service entre la station de base et les dispositifs de combinés.

L'invention concerne aussi une station de base et également un dispositif de combiné convenant à un tel appareil.

L'invention concerne aussi un procédé pour transmettre dans un appareil téléphonique satisfaisant à la norme DECT ou similaire, une information d'identification définissant un usager appelant.

L'invention trouve des applications importantes dans les systèmes de télécommunication impliquant des protocoles, c'est notamment le cas des appareils téléphoniques répondant à la norme DECT, par exemple.

Les appareils téléphoniques de ce type comportant bien souvent une multitude de dispositifs de combinés offrent de plus en plus de fonctions à l'usager.

Une fonction dont le besoin se fait sentir de plus en plus est la visualisation du numéro de l'abonné appelant.

Un problème qui se pose avec ce genre d'appareil est qu'il faut transmettre aux postes d'abonnés ce numéro sans pour cela trop utiliser les ressources radioélectriques de l'appareil et sans trop perturber les communications en cours.

La présente invention propose un appareil du genre mentionné dans le préambule qui permet de fournir, aux utilisateurs, ce numéro de l'abonné appelant en apportant une solution satisfaisante au problème précité.

Pour cela, un tel appareil est remarquable en ce que ce numéro est diffusé au moyen d'un message de service.

L'idée de l'invention consiste à utiliser la possibilité de diffuser à tous les dispositifs de combinés des informations afin de faire connaître à ceux-ci le numéro de l'abonné appelant. On utilise la procédure d'envoi de message CLMS de la norme DECT qui n'entrave pas le trafic en cours,

La description suivante faite en regard des dessins ci-annexés, le tout donné à titre d'exemple on limitatif, fera bien comprendre comment l'invention peut être réalisée.

La figure 1 montre un appareil conforme à l'invention.

La figure 2 montre un diagramme explicitant le fonctionnement de la station de base.

La figure 3 montre un diagramme explicitant le fonctionnement d'un dispositif d'abonné.

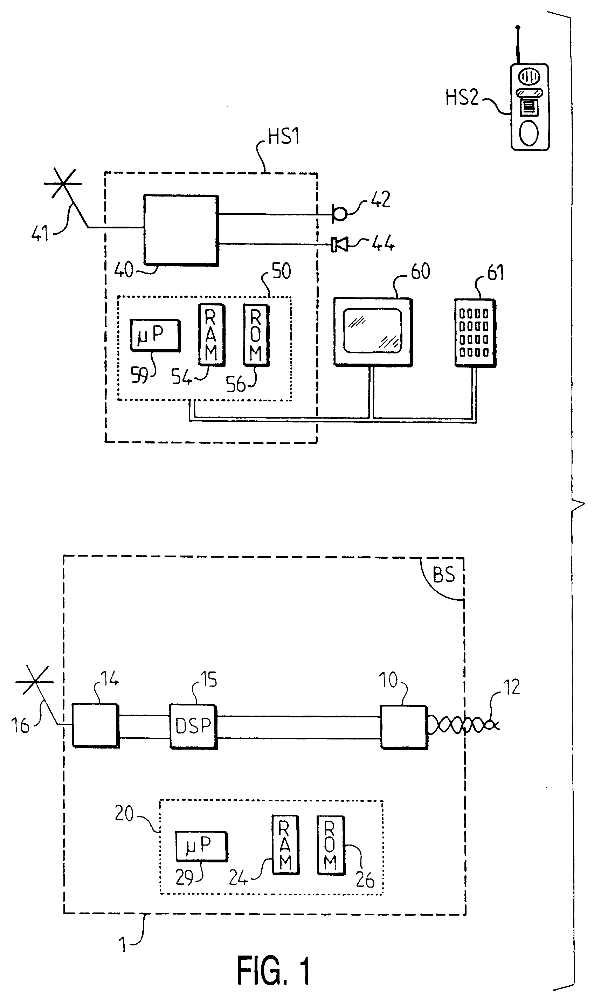

A la figure 1, l'appareil qui est représenté est un appareil répondant aux normes DECT. La référence 1 montre la station de base BS à laquelle peut être rattachée, par voie radioélectrique, une pluralité de dispositifs de combinés HS1, HS2, ... Cette station de base 1 comporte, entre autres, un circuit de ligne 10 qui lui permet d'être raccordée au réseau commuté via une ligne téléphonique 12 et un circuit radioélectrique 14 qui autorise le dialogue avec les différents combinés HS1, HS2, ..., en émettant et en recevant des ondes par l'intermédiaire d'une antenne 16. Pour traiter toutes les informations de nature analogique qui transitent à l'intérieur du circuit de base, il est prévu un organe de traitement de signal 15 formé autour d'un processeur de signal DSP qui traite les signaux vocaux notamment.

Tous les éléments de ce circuit de base 1 sont gérés par un ensemble à microprocesseur 20. Cet organe est composé, notamment, de la façon usuelle, d'une mémoire vive 24, d'une mémoire morte 26 contenant les instructions de fonctionnement de l'appareil et d'un processeur de gestion 29.

Le dispositif de combiné HS1, seul montré en détail (le dispositif HS2 pouvant être de structure identique) comporte un ensemble de communication 40 muni d'une antenne 41 qui lui permet de communiquer avec la station de base BS et de là, avec les autres dispositifs de combinés HS2,... Cet ensemble traite les informations en provenance du microphne 42 et fournit aussi les signaux pour un haut-parleur 44. Il est prévu aussi un organe de gestion 50 composé, tout comme l'organe de gestion 20, d'une mémoire vive 54, d'une mémoire morte 56 contenant les instructions de fonctionnement de l'appareil et d'un processeur de gestion 59. Le dispositif HS1 comporte aussi un écran 60 sur lequel différentes informations sont affichées et un clavier 61. Ces combinés sont des mobiles et de ce fait sont alimentés par un accumulateur, non représenté sur la fiture 1.

Selon l'invention, le numéro de l'utilisateur ou de l'abonné du réseau téléphonique commuté qui appelle est retransmis à tous les appareils reliés à la station de base. Cette retransmission utilise les possibilités des normes DECT qui régissent le fonctionnement et la structure des appareils téléphoniques satisfaisant à ladite norme.

Ainsi, pour cette transmission, on utilise d'une part le service connu sous le nom de "Long Paging broadcast" défini dans la norme ETS 300 175-3 aux paragraphes 7.2.4.1.1, 7.2.4.2 et 9.1.3.1 et d'autre part le service connu sous le nom de CLMS (Connectionless Message Service) défini par la norme ETS 300 175-5 au paragraphe 9.

Cette mesure préconisée par l'invention évite d'utiliser les liaisons radioélectriques utilisées pour les communications usuelles entre utilisateurs de sorte que celles-ci restent disponibles. La transmission de ce numéro d'identification ne pénalise donc pas le trafic local.

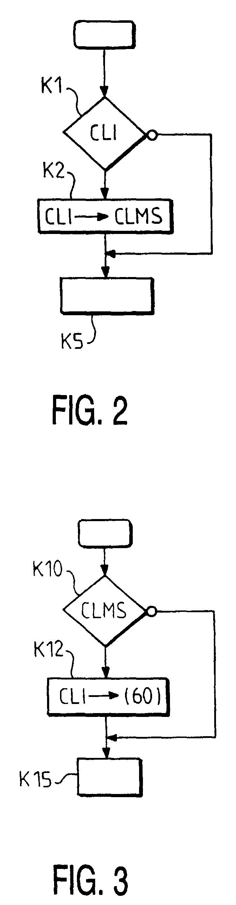

La figure 2 explicite le fonctionnement de la station de base 1 en ce qui concerne la transmission de ce numéro de l'usager appelant. La case K1 décrit la procédure qui permet de détecter la transmission sur la ligne téléphonique 12 du numéro de l'appelant. Cette transmission de numéro de l'usager qui appelle peut se faire selon la modalités prescrites par le document édité par France Télécom CSE B 14-10 W en septembre 1995. Si ce numéro CLI est transmis (case K2) alors on fait appel aux messages de type CLMS et le fonctionnement de la base se déroule ensuite comme à l'accoutumée (case K5). Si il n'y a pas de transmission du numéro de l'appelant, on passe donc directement de la case K1 à la case K5.

La figure 3 explicite le fonctionnement du dispositif de combiné. Ce dispositif détecte la transmission d'un message de type CLMS, case K10. Si il y a transmission d'un tel message alors le numéro qu'il contient est visualisé sur l'écran 60 (case K12). On passe ensuite au fonctionnement normal de ce combiné case K15. S'il n'y a pas de message CLMS, on va donc directement à cette case K15.

Le mode de fonctionnement que l'on vient de décrire implique que les messages de type CLMS sont utilisés uniquement pour la transmission du numéro de l'usager appelant. Si ces messages sont utilisés pour d'autres fonctions, on devra ajouter une information de détermination de message qui permettra la gestion de ces messages.

## Revendications

1. Appareil téléphonique satisfaisant à la norme DECT ou similaire comportant :
- une station de base connectée au réseau téléphonique transmettant une information d'identification définissant un usager appelant formé, entre autres, par :
* un ensemble à processeur,
* une mémoire contenant un programme d'exécution et
* une mémoire vive,
- au moins un dispositif de combiné formé entre autres par
* un écran de visualisation
* un ensemble à processeur destiné notamment à piloter ledit écran de visualisation,
- des moyens de transmission de messages de service entre la station de base et les dispositifs de combinés caractérisé en ce qu'il comporte en outre :
- des moyens de diffusion desdites informations d'identification à tous les dispositifs de combinés en coopérant avec les moyens de transmission de messages de service.

2. Appareil téléphonique selon la revendication 1, caractérisé en ce que l'information d'identification est visualisée sur l'écran du dispositif de combiné.

3. Dispositif de combiné convenant à un appareil selon l'une des revendications 1 à 2, comportant un écran, caractérisé en ce que l'information d'identification est visualisée sur l'écran.

4. Station de base convenant à un appareil selon l'une des revendications 1 à 2, caractérisée en ce qu'elle comporte des moyens pour détecter la transmission d'un numéro d'appelant, et des moyens pour l'inclure dans lesdits messages de service.

5. Procédé pour transmettre dans un appareil téléphonique satisfaisant à la norme DECT ou similaire, une information d'identification définissant un usager appelant. caractérisé en ce que cette information est diffusée par les messages de services définis par ladite norme.
